# EUROPÄISCHE PATENTANMELDUNG

(11) **EP 1 783 761 A1**
(43) Veröffentlichungstag der Anmeldung: **09.05.2007**
(21) Anmeldenummer: 05110475.0
(22) Anmeldetag: 08.11.2005
(51) Int. Cl.: G11B 7/125

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: ZUCKER, Friedhelm, 78052, Villingen-Schwenningen (DE)
(74) Vertreter: Thies, Stephan

(57) **Zusammenfassung**

Die Erfindung betrifft ein Gerät zum Lesen und/oder Beschreiben optischer Aufzeichnungsträger (100) aufweisend eine relativ zum optischen Aufzeichnungsträger (100) beweglich angeordnete optische Einheit (300) und eine relativ zum optischen Aufzeichnungsträger (100) unbeweglich angeordnete Basiseinheit (200), wobei die optische Einheit (300) eine Lichtquelle (1), einen Photodetektor und elektrische Bauelemente eines Regelkreises aufweist.

Erfindungsgemäß ist vorgesehen, daß der Photodetektor eine Monitordiode (11) ist, und die elektrischen Bauteile einen Intensitätsregler (13) bilden, an dem das Ausgangssignal (MDS) der Monitordiode (11) und ein Intensitätsvorgabe (IVS) anliegen, und der ein Ansteuersignal (LDS) für die Lichtquelle (1) abgibt.

## Beschreibung

Die vorliegende Erfindung betrifft ein Gerät zum Lesen und/oder Beschreiben optischer Aufzeichnungsträger, wie beispielsweise CD-Spieler, DVD-Spieler oder entsprechende Aufzeichnungsgeräte.

Aus der US-A-5,050,154 ist ein derartiges Gerät bekannt, welches eine relativ zum optischen Aufzeichnungsträger beweglich angeordnete optische Einheit aufweist, und eine relativ zum optischen Aufzeichnungsträger unbeweglich angeordnete Basiseinheit. Dabei sind auf der optischen Einheit eine Lichtquelle, ein Photodetektor und elektrische Bauelemente, wie Verstärker für den Photodetektor oder für Stellglieder eines Regelkreises angeordnet. Als nachteilig an diesem bekannten Gerät ist anzusehen, daß die beweglich angeordnete optische Einheit aufgrund der an ihr angeordneten elektrischen Bauelemente ein relativ hohes Gewicht aufweist. Sie ist daher zwar beweglich, aber relativ träge, was die mögliche Geschwindigkeit des Geräts, insbesondere beim Springen zwischen unterschiedlichen Stellen des optischen Aufzeichnungsträgers, reduziert.

Es ist eine Aufgabe der vorliegenden Erfindung, ein bekanntes Gerät zu verbessern.

Erfindungsgemäß ist vorgesehen, daß der Photodetektor eine Monitordiode ist, und die auf der beweglichen optischen Einheit angeordneten Bauteile einen Intensitätsregler bilden. Diesem werden das Ausgangssignal der Monitordiode und ein Intensitätsvorgabesignal zugeführt, aus denen er ein Ansteuersignal für die Lichtquelle erzeugt und an diese abgibt. Es hat sich herausgestellt, daß das Monitordiodensignal eines Geräts zum Lesen und/oder Beschreiben optischer Aufzeichnungsträger sowie der entsprechende Regelkreis die für elektromagnetische Störeinflüsse empfindlichsten Elemente des Geräte sind, und es sinnvoll ist, diese auf der beweglichen optischen Einheit unterzubringen, während andere elektrische Bauelemente aus Gewichtsgründen vorteilhafterweise auf der unbeweglichen Basiseinheit angeordnet sind. Dies ist besonders vorteilhaft, wenn das Intensitätsvorgabesignal zeitlich variabel ist. Dies ist beispielsweise dann der Fall, wenn es unterschiedliche Werte für unterschiedliche optische Aufzeichnungsträgertypen annimmt, alterungsabhängige Änderungen des Intensitätsvorgabesignals vorzunehmen sind, oder wenn es sich um ein Modulationssignal für das Aufzeichnen beziehungsweise Beschreiben des optischen Aufzeichnungsträgers handelt.

Vorteilhafterweise ist der den Intensitätsregler aufweisende Regelkreis der einzige Regelkreis, der auf der beweglich angeordneten optischen Einheit angeordnet ist. Dies hat neben dem Gewichtsvorteil auch noch den Vorteil verminderter gegenseitiger elektrischer oder elektromagnetischer Störeinflüsse unterschiedlicher im Gerät vorhandener Regelkreise untereinander.

Intensitätsregler und Monitordiode sind erfindungsgemäß über eine gegenüber elektromagnetischen Störeinflüssen abgeschirmte Signalleitung verbunden. Dies hat den Vorteil, daß eine weitere Verringerung von elektromagnetischen Störeinflüssen nicht nur durch Verkürzen des Signalleitungswegs erfolgt, sondern auch durch zusätzliche elektromagnetische Abschirmung der Signalleitung.

Erfindungsgemäß ist vorgesehen, daß der Intensitätsregler und die Monitordiode auf einem einzigen integrierten Schaltkreis angeordnet sind. Dadurch ist die größtmögliche Ausschaltung von Störeinflüssen erzielt, da die Monitordiode direkt auf dem Intensitätsreglungsschaltkreis sitzt. Vorteilhafterweise ist die Monitordiode sogar Teil des integrierten Schaltkreises.

Gemäß einer Ausgestaltungsform der Erfindung ist vorgesehen, den integrierten Schaltkreis entfernt von dem Ort anzuordnen, an dem sich die Monitordiode üblicherweise befindet. Zwischen diesem Ort und dem tatsächlichen Ort der Monitordiode ist ein Lichtwellenleiter vorgesehen. Dies hat den Vorteil, daß die Kombination aus Monitordiode und Intensitätsreglungsschaltkreis nicht dort angeordnet sein muß, wo die Monitordiode üblicherweise sitzt, was beispielsweise zu Platzproblemen führt, sondern an einem im Hinblick auf geometrische/räumliche Verhältnisse optimierten Stelle der beweglichen optischen Einheit. Der Lichtwellenleiter ist unabhängig von elektromagnetischen Störeinflüssen und ermöglicht somit die räumliche Trennung von üblichem Ort der Monitordiode und tatsächlichem Ort der Monitordiode. Die Stelle, an der der integrierte Schaltkreis angeordnet ist, ist vorteilhafterweise auch im Hinblick auf Abwärme des Schaltkreises optimiert.

Ein erfindungsgemäßes Verfahren zum Ansteuern einer Lichtquelle, die auf einer beweglichen optischen Einheit eines Geräts zum Lesen und/oder Beschreiben optischer Aufzeichnungsträger angeordnet ist, weist folgende Schritte auf: ein Intensitätsvorgabesignal wird auf einer von der beweglichen optischen Einheit entfernt angeordneten unbeweglichen Basiseinheit erzeugt und der beweglichen optischen Einheit zugeführt. Auf der beweglichen optischen Einheit wird ein Monitordiodensignal erzeugt und störeinflußfrei einem auf der beweglichen optischen Einheit angeordneten Intensitätsregler zugeführt. Der Intensitätsregler erzeugt aus dem Monitordiodensignal und dem Intensitätsvorgabesignal ein Ansteuersignal für die auf der beweglichen optischen Einheit angeordnete Lichtquelle. Dies hat den Vorteil, daß kein Abführen des Monitordiodensignals von der beweglichen optischen Einheit zur Basiseinheit mehr erforderlich ist. Weiterhin ist das Zuführen des Ansteuersignals für die Lichtquelle zur beweglichen optischen Einheit ersetzt durch das Zuführen eines Intensitätsvorgabesignals. Es wird somit eine geringere Anzahl von Signalen zwischen beweglicher und unbeweglicher Einheit übermittelt. Zudem ist das Intensitätsvorgabesignal im allgemeinen ein weniger störanfälliges Signal als das Ansteuersignal, was die Störanfälligkeit des Geräts verringert.

Weitere Ausgestaltungen und Vorteile der Erfindung sind auch in der nachfolgenden Beschreibung von Ausführungsbeispielen angegeben. Dabei zeigen:
- Fig. 1: schematische Darstellung eines erfindungsgemäßen Geräts,
- Fig. 2: schematisches Ablaufdiagramm.

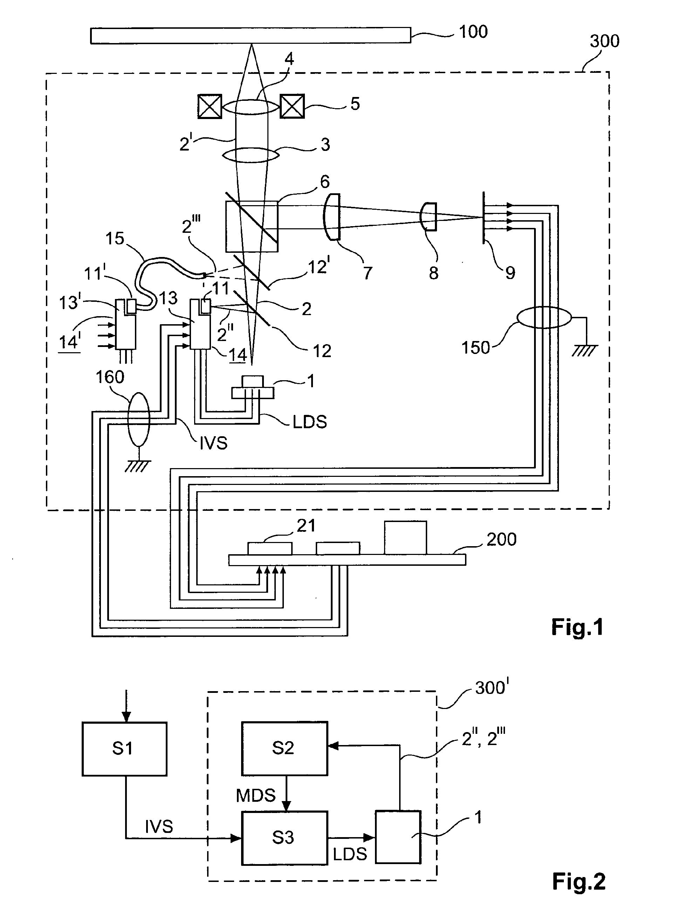

Fig. 1 zeigt ein erfindungsgemäßes Gerät in schematischer Darstellung. Optischer Aufzeichnungsträger 100 und Basiseinheit 200 sind unbeweglich zueinander angeordnet, wobei der optische Aufzeichnungsträger 100 im Fall einer optischen Platte eine Rotationsbewegung bezüglich der Basiseinheit 200 ausführt. Die optische Einheit 300 ist relativ zum optischen Aufzeichnungsträger 100 beweglich angeordnet, in der Abbildung nach links und rechts parallel zum optischen Aufzeichnungsträger 100.

Die optische Einheit 300 weist als Lichtquelle 1 eine Laserdiode 1 auf, welche einen Lichtstrahl 2 erzeugt. Dieser durchläuft einen Strahlteiler 6 und eine Kollimatorlinse 3. Der kollimierte Strahl 2' wird von einer Objektivlinse 4 auf eine Aufzeichnungsschicht des optischen Aufzeichnungsträgers 100 fokussiert. Dazu ist ein Fokusaktuator 5 dargestellt. Ebenfalls vorhandene Aktuatoren für Spurführung und/oder Verkippungskompensation sind der Einfachheit halber hier nicht dargestellt. Vom Aufzeichnungsträger 100 wird der Lichtstrahl reflektiert und durchläuft eine Objektivlinse 4 und einen Kollimator 3 bevor er von einem Strahlteiler 6 in Richtung der Linsen 7 und 8 geleitet wird, die ihn auf einen Photodetektor 9 fokussieren. Vom Photodetektor 9 generierte Signale werden mittels Leitungen, beispielsweise einem abgeschirmten Kabel 150, zur Basiseinheit 200 geleitet, wo sie entsprechenden Auswerteeinheiten 21 zugeführt werden. Die optische Einheit 300 weist weiterhin eine Monitordiode 11 auf, die mittels eines geeigneten optischen Elements, hier mittels eines halbdurchlässigen Spiegels 12, einen Teil des von der Laserdiode 1 ausgesandten Lichts empfängt und ein elektrisches Ausgangssignal an einen Intensitätsregler 13 weitergibt. Die Monitordiode kann alternativ auch an anderen dafür geeigneten, dem Fachmann bekannten Orten angeordnet sein, beispielsweise ins Gehäuse der Laserdiode 1 integriert. Der Intensitätsregler 13 dient dazu, die Ausgangsleistung der Laserdiode 1 zu regeln. Dem Intensitätsregler 13 wird dazu neben dem hier nicht dargestellten Ausgangssignal MDS ein Intensitätsvorgabesignal IVS zugeführt. Der Intensitätsregler 13 gibt ein Ansteuersignal LDS für die Lichtquelle 1 ab. Neben dem Intensitätsvorgabesignal IVS werden der optischen Einheit 300 von der Basiseinheit 200 auch noch Versorgungsspannung über eine hier ebenfalls als abgeschirmtes Kabel 160 dargestellte Zuleitung zugeführt. Die Leitung 160 ist beispielsweise eine flexible PCB-Verbindung. Im dargestellten Ausführungsbeispiel läuft auch die Versorgungsspannung über den Intensitätsregler 13. Außer dem Intensitätsregler 13 ist kein weiterer Regelkreis auf der optischen Einheit 300 angeordnet. Spurführungsregelkreis, Fokusregelkreis etc. befinden sich unter den Auswerteeinheiten 21 auf der Basiseinheit 200.

Intensitätsregler 13 und Monitordiode 11 sind als auf einem einzigen integrierten Schaltkreis 14 angeordnet dargestellt. Die Signalleitung zwischen Monitordiode 11 und Intensitätsregler 13 ist somit gegenüber elektromagnetischen Störeinflüssen optimal abgeschirmt.

Die Monitordiode 11 ist an einem Punkt optimierten Querschnitts des von dem halbdurchlässigen Spiegel 12 reflektierten Teilstrahls 2" angeordnet. Dies hat zur Folge, daß auch der Intensitätsregler 13 nahe diesem Punkt befindlich angeordnet ist. Eine Alternativlösung ist ebenfalls in Fig. 1 angegeben: ein alternativ dargestellter halbdurchlässiger Spiegel 12' erzeugt einen Strahl 2"', an dessen Punkt optimalen Querschnitts ein Lichtleiter 15 angeordnet ist, der das auf ihn treffende Licht zu einer Monitordiode 11' weiterleitet. Die Monitordiode 11' ist wie zuvor beschrieben mit einem Intensitätsregler 13' verbunden, der entsprechende Einund Ausgangssignale, die hier nicht weiter dargestellt sind, empfängt beziehungsweise abgibt.

Fig. 2 zeigt ein schematisches Ablaufdiagramm des erfindungsgemäßen Verfahrens zum Ansteuern der Lichtquelle 1. Die Schritte, die auf der optischen Einheit 300 stattfinden, sind in einem Kästchen 300' kenntlich gemacht. Außerhalb der optischen Einheit wird im Schritt S1 ein Intensitätsvorgabesignal erzeugt und als Intensitätsvorgabesignal IVS weitergeleitet. Aus dem Intensitätsvorgabesignal IVS und einem Signal MDS wird im Schritt S3 ein Ansteuersignal LDS für die Lichtquelle 1 erzeugt. Diese gibt Licht entsprechender Leistung ab, welches teilweise im Strahl 2", 2"' auf die Monitordiode 11, 11' fällt, in der ein elektrisches Ausgangssignal MDS im Schritt S2 erzeugt wird.

Im Gegensatz zu bekannten Geräten sind erfindungsgemäß die Monitordiode 11, manchmal auch als Front Monitor Diode bezeichnet, und der Intensitätsregler 13, manchmal auch als Laser Diode Driver bezeichnet, keine unabhängigen Komponenten. Es ist daher nicht notwendig, die Ausgangssignale der Monitordiode 11 über die Leitung 160 zur Basiseinheit 200 zu leiten. Stattdessen ist der gesamte Regelkreis zur Laserleistungsregelung auf der optischen Einheit 300 angeordnet. Dies ermöglicht es, daß die Leistung des Lasers 1 sehr präzise und schnell geregelt werden kann, was insbesondere dann wichtig ist, wenn ein pulsartig moduliertes Lasersignal zum Aufzeichnen auf den optischen Aufzeichnungsträger 100 gewünscht ist. Es gibt auch Auslesemodi, in denen ein präzise gesteuerter Pulsmodus der Laserdiode 1 vorteilhaft ist. Dadurch, daß Monitordiode 11 und Intensitätsregler 13 in einer einzigen physikalischen Einheit integriert sind, reicht es aus, Informationen über das Modulationsprofil mittels des Intensitätsvorgabesignals IVS dem Intensitätsregler 13 zuzuführen. Dieses Signal IVS ist sozusagen der Sollwert für den Intensitätsregler 13 und daher wesentlich weniger störanfällig als die Signale im Regelkreis. Als Nebenaspekt ist erwähnenswert, daß ein separater Ausgang für das Monitordioden-Ausgangssignal MDS an der optischen Einheit 300 erfindungsgemäß entfällt und statt eines Eingangs für das Laserdioden-Ansteuersignal LDS ein Eingang für das Intensitätsvorgabensignal IVS vorhanden ist. Dies hat unter anderem den Vorteil, daß das Ansteuersignal LDS für die Laserdiode 1 auf der optischen Einheit 300 selbst erzeugt wird, und nicht von außen zugeführt wird. Dies vermindert das Risiko, daß ein falsch dimensioniertes von außen zugeführtes Signal zur Zerstörung der Laserdiode 1 führt. Die optische Einheit 300 ist damit inhärent sicher ausgelegt. Auch der Signalaustausch zwischen Basiseinheit 200 und optischer Einheit 300 ist vereinfacht, da es nicht mehr notwendig ist, kritische schnelle Signale, die im Regelkreis der Laserdiode 1 auftreten, außerhalb der optischen Einheit 300 weiterzuleiten. Die Anforderungen an die Störsicherheit der Leitung 160 können somit vermindert werden. Da der Intensitätsregler 13 direkt auf der optischen Einheit 300 angeordnet ist, kann er optimal auf die Laserdiode 1 und die anderen Komponenten der optischen Einheit 300 angepaßt werden. Optimale Geschwindigkeit und optimale Pulsform ist somit erreichbar, was nicht oder nur mit erhöhtem Aufwand möglich ist, wenn der Intensitätsregler 13 außerhalb der optischen Einheit 300 befindlich ist. Die alternative Lösung mit optischer Lichtleitung 15 ermöglicht es, das Kombinationselement aus Monitordiode 11' und Intensitätsregler 13' an einem geeigneten Ort der optischen Einheit 300 anzuordnen. Das Ausgangssignal MDS der Monitordiode 11, 11' ist üblicherweise ein relativ schwaches Signal, welches möglichst nicht über lange Leitungen transportiert werden sollte, da dies zu Signalabschwächung aber auch zu Störungen aufgrund von Schwingungsverhalten führt. Die erfindungsgemäße Kopplung von Monitordiode 11 und Intensitätsregler 13 vermindert derartige Störeinflüsse signifikant. Insbesondere wenn ein komplexes Modulationsprofil der Ausgangsleistung der Laserdiode 1 gewünscht ist, beispielsweise beim Aufzeichnen auf optische Aufzeichnungsträger 100, ist die erfindungsgemäße Anordnung optimal.

## Patentansprüche

1. Gerät zum Lesen und/oder Beschreiben optischer Aufzeichnungsträger (100) aufweisend eine relativ zum optischen Aufzeichnungsträger (100) beweglich angeordnete optische Einheit (300) und eine relativ zum optischen Aufzeichnungsträger (100) unbeweglich angeordnete Basiseinheit (200), wobei die optische Einheit (300) eine Lichtquelle (1), einen Photodetektor und elektrische Bauelemente eines Regelkreises aufweist, **dadurch gekennzeichnet, daß** der Photodetektor eine Monitordiode (11, 11') ist, und die elektrischen Bauteile einen Intensitätsregler (13, 13') bilden, an dem das Ausgangssignal (MDS) der Monitordiode (11, 11') und ein Intensitätsvorgabesignal (IVS) anliegen, und der ein Ansteuersignal (LDS) für die Lichtquelle (1) abgibt.

2. Gerät nach Anspruch 1, **dadurch gekennzeichnet, daß** der den Intensitätsregler (13, 13') aufweisende Regelkreis der einzige auf der beweglich angeordneten optischen Einheit (300) befindliche Regelkreis ist.

3. Gerät nach einem der Ansprüche 1 oder 2, **dadurch gekennzeichnet, daß** der Intensitätsregler (13, 13') und die Monitordiode (11, 11') über eine gegenüber elektromagnetischen Störeinflüssen abgeschirmte Signalleitung verbunden sind.

4. Gerät nach einem der Ansprüche 1 oder 2, **dadurch gekennzeichnet, daß** Intensitätsregler (13, 13') und Monitordiode (11, 11') auf einem einzigen integrierten Schaltkreis (14) angeordnet sind.

5. Gerät nach Anspruch 4, **dadurch gekennzeichnet, daß** der integrierte Schaltkreis (14) entfernt vom für eine Monitordiode (11') vorgesehenen Ort angeordnet ist, und ein Lichtwellenleiter (15) zwischen dem für eine Monitordiode (11') vorgesehenen Ort und der auf dem integrierten Schaltkreis (14') angeordneten Monitordiode (11') angeordnet ist.

6. Verfahren zum Ansteuern einer auf einer beweglichen optischen Einheit (300) angeordneten Lichtquelle (1) eines Geräts zum Lesen und/oder Beschreiben optischer Aufzeichnungsträger (100) mit folgenden Schritten:
- Erzeugen eines Intensitätsvorgabesignals (IVS) auf einer von der beweglichen optischen Einheit (300) entfernt angeordneten Basiseinheit (200),
- Zuführen des Intensitätsvorgabesignals (IVS) zur beweglichen optischen Einheit (300),
- Erzeugen eines Monitordiodensignals (MDS) auf der beweglichen optischen Einheit (300),
- Störeinflußfreies Zuführen des Monitordiodensignals (MDS) und Zuführen des Intensitätsvorgabesignals (IVS) zu einem auf der beweglichen optischen Einheit (300) angeordneten Intensitätsregler (13), und
- Erzeugen eines Ansteuersignals (LDS) für die und Zuführen dieses Ansteuersignals (LDS) zu der Lichtquelle (1).
